Europäisches Patentamt

European Patent Office

Office européen des brevets

(19)

(11) **EP 0 846 736 B1**

(12) **FASCICULE DE BREVET EUROPEEN**

(45) Date de publication et mention
de la délivrance du brevet:
**25.07.2001 Bulletin 2001/30**

(51) Int Cl.⁷: **C09D 9/00**

(21) Numéro de dépôt: **97402918.3**

(22) Date de dépôt: **03.12.1997**

(54) **Compositions décapante pour peintures, vernis ou laques**

Abbeizmittel zur Entfernung von Farb- und Lackbeschichtungen

Paint stripper for removing coatings and lacquers

(84) Etats contractants désignés:
**AT BE CH DE DK ES FI FR GB GR IE IT LI LU NL
PT SE**

(30) Priorité: **06.12.1996 FR 9615042
27.02.1997 FR 9702345**

(43) Date de publication de la demande:
**10.06.1998 Bulletin 1998/24**

(73) Titulaire: **Atofina
92800 Puteaux (FR)**

(72) Inventeur: **Lallier, Jean-Pierre
92400 Courbevoie (FR)**

(74) Mandataire: **Chaillot, Geneviève
Cabinet CHAILLOT,
16-20, avenue de L'Agent Sarre,
B.P. 74
92703 Colombes Cédex (FR)**

(56) Documents cités:
**EP-A- 0 648 820          US-A- 4 732 695
US-A- 5 232 515          US-A- 5 411 678**

• **DATABASE WPI Week 8948 Derwent
Publications Ltd., London, GB; AN 89-350370
XP002036393 & ES 2 008 593 A (PINTURAS
BLATEM SL) , 16 juillet 1989**

Remarques:
Le dossier contient des informations techniques
présentées postérieurement au dépôt de la
demande et ne figurant pas dans le présent
fascicule.

**Description**

La présente invention concerne une composition décapante de peintures, vernis ou laques recouvrant un substrat, tel que les métaux et le bois.

Dans le secteur du décapage industriel, on décape des volets, des fenêtres, des portes, des radiateurs, mais également n'importe quelle pièce mécanique (ex : moyeux de roues, jantes, etc...). Le décapage industriel des peintures et similaires s'effectue par immersion des pièces à décaper dans un bain liquide formulé à froid ou à chaud, ce bain liquide pouvant être agité ou non. Les pièces sont laissées un certain temps dans le bain jusqu'à obtention du décapage (dégradation ou soulèvement de la peinture suivant les systèmes). Ensuite, les pièces sont retirées du bain et sont rincées au jet d'eau sous haute pression ("carcher"), les écailles ou les boues de peinture étant alors éliminées par la pression du jet d'eau. Lorsque le bain contient une base forte du type NaOH, on conduit une opération de neutralisation dans un bain acide constitué d'une solution d'acide sulfurique ou chlorhydrique.

Les formulations actuellement utilisées en décapage industriel sont ou bien au chlorure, ou bien à l'alcalin.

Les formulations ou bains au chlorure sont des mélanges à base de chlorure de méthylène, de méthanol (5 à 10% en poids) et d'aromatiques (toluène, xylène à raison de quelques pourcents). Ces mélanges peuvent également comporter des activateurs, lesquels peuvent être acides (comme l'acide formique) ou basiques (comme la monoéthanolamine). Les bains au chlorure sont utilisés à froid, le chlorure de méthylène étant très volatil et l'odeur qu'il dégage est très suffocante. L'action de décapage se fait par soulèvement de la peinture avec formation d'écailles. Les décapeurs industriels veulent actuellement remplacer le chlorure par un substitut pour des problèmes d'environnement.

Les formulations ou bains à l'alcalin sont essentiellement à base de soude dans l'eau additivée de glycolate de sodium, d'agents complexants, d'agents mouillants. Les mélanges sont utilisés à chaud, à une température de l'ordre de 50°C à 100°C, et le temps de décapage est divisé par deux à chaque fois que l'on élève la température de 20°C. Le mécanisme d'action est totalement différent par rapport aux formules au chlorure. En effet, ces formules dégradent la peinture par réaction de la soude sur le polymère. En particulier avec les peintures glycéro-phtaliques et les alkydes, il se produit une saponification des fonctions esters, ce qui dégrade la peinture en la réduisant en poudre. Celle-ci, dispersée dans le bain, forme une boue, "bête noire" des décapeurs. Cette boue n'est en effet pratiquement pas filtrable (colmatage). Par ailleurs, les formules à l'alcalin sont moins efficaces sur les autres types de peintures (époxy, polyuréthanne, etc...). Les décapeurs industriels veulent donc également trouver une formule de substitution plus polyvalente et ne conduisant pas à la dégradation de la peinture.

La Société déposante a donc recherché de nouvelles formulations décapantes pour peintures, vernis ou laques, répondant aux besoins actuels décrits ci-dessus et constituant des formulations bon marché pour pouvoir remplacer avantageusement les formulations connues au chlorure et à l'alcalin.

La nouvelle composition décapante selon la présente invention répond à ces objectifs ; elle est caractérisée par le fait qu'elle est constituée par :

(A) 5 à 90 parties en poids, de préférence 10 à 80 parties en poids, d'eau ;
(B) 2 à 47,5 parties en poids, de préférence 5 à 45 parties en poids, d'alcool benzylique ;
(C) 2 à 47,5 parties en poids, de préférence 5 à 45 parties en poids, de diméthylsulfoxyde ou de N-méthylpyrrolidone, (A) + (B) + (C) représentant 100 parties en poids.

La proportion d'eau, qui peut être importante, fait de cette composition une formulation très intéressante du point de vue des coûts.

La composition décapante selon l'invention peut en outre comprendre

(D) au moins un activateur choisi parmi la monoéthanolamine (MEA), la triéthanolamine (TEA), l'acide formique, le pyrrole, les mélanges TEA/acide formique, le benzaldéhyde, les mélanges MEA/benzaldéhyde et les hydroxydes des métaux alcalins tels que l'hydroxyde de sodium (NaOH), à raison notamment de 0,1 à 10 parties en poids pour 100 parties en poids de (A) + (B) + (C),

Les activateurs préférés sont les mélanges MEA/benzaldéhyde (en particulier 1 partie en poids de MEA et 2 parties en poids de benzaldéhyde), le benzaldéhyde et NaOH.

La composition décapante selon l'invention peut encore comprendre en outre :

(E) au moins un agent tensio-actif, à raison notamment de 0,1 à 10 parties en poids pour 100 parties en poids de (A) + (B) + (C) ; comme exemples d'agents tensio-actifs non-ioniques, on peut citer les agents tensio-actifs éthoxylés de la série "METOX", commercialisés par la Société "SEPPIC" (par exemple, la coupe d'ester méthylique éthoxylé comprenant 20 motifs d'oxyde d'éthylène "METOX 20 OE") ; comme exemples d'agents tensio-actifs ioniques, on peut citer le dodécylsulfate de sodium ;

(F) au moins un épaississant choisi notamment parmi les épaississants acryliques, à raison notamment de 0,1 à 10 parties en poids pour 100 parties en poids de (A) + (B) + (C) ; ; comme exemples particuliers d'épaississant acrylique on peut citer les résines acryliques commercialisées sous la dénomination "CARBOPOL" par la Société GOODRICH, BF, Co, dont le procédé d'obtention est décrit dans le brevet américain US-A-4 419 502 intitulé

**EP 0 846 736 B1**

"Polymerization process for carboxyl-containing polymers".

Conformément à un mode de réalisation particulièrement intéressant de la présente invention, la composition décapante ne comprend ni agent tensio-actif ni épaississant, se présentant alors sous la forme d'une émulsion instable.

Conformément à deux autres modes de réalisation de la présente invention, la composition décapante comprend au moins un agent tensio-actif et aucun épaississant, se présentant alors sous la forme d'une micro-émulsion, ou elle comprend au moins un épaississant et aucun agent tensio-actif, se présentant sous la forme d'une émulsion épaissie.

La présente invention porte également sur un procédé de décapage de peintures, laques et vernis appliqués sur un substrat, à l'aide d'une composition décapante telle que définie ci-dessus, caractérisé par le fait qu'on immerge ledit substrat dans un bain éventuellement chauffé ( par exemple à une température comprise entre 40 et 70°C) et éventuellement agité de la composition décapante lorsque celle-ci se présente sous les formes précitées d'émulsion instable ou de micro-émulsion, pendant un laps de temps suffisant pour provoquer le soulèvement de la peinture, du vernis ou de la laque, ou qu'on applique sur ledit substrat une composition décapante se présentant sous la forme précitée d'émulsion épaissie et qu'on laisse agir pendant un laps de temps suffisant pour provoquer le soulèvement de la peinture, du vernis ou de la laque.

Les exemples suivants illustrent la présente invention sans toutefois en limiter la portée. Dans ces exemples, les pourcentages des compositions sont donnés en poids.

## EXEMPLE 1 : EMULSION INSTABLE

On a préparé une émulsion instable décapante formulée comme suit :

| Eau | 78 % |
| --- | --- |
| Alcool benzylique | 11,6 % |
| Diméthylsulfoxyde | 10,4 % |
| | 100 % |

En mélangeant ces trois ingrédients par bullage, on forme une émulsion laiteuse instable, qui ne se déphase totalement qu'après au moins une heure.

On a immergé dans un bain de cette émulsion, porté à 50°C, sous agitation, un substrat en acier phosphaté revêtu d'une laque polyester (Blanc Glacier 389 d'HERBERTS), fourni par la Société ETALON.

Le décapage a demandé 20 minutes.

## EXEMPLE 2: MICRO-EMULSION

On a préparé une micro-émulsion décapante formulée comme suit :

| Eau | 77,3 % |
| --- | --- |
| Alcool benzylique | 12 % |
| Diméthylsulfoxyde | 10,7 % |
| | 100 % |
| Dodécylsulfate de sodium : | 3,1% |

En mélangeant ces ingrédients, on obtient une microémulsion totalement transparente et s'apparentant à de l'eau, avec seulement une très faible odeur de solvants.

On a conduit un essai de décapage dans les mêmes conditions que dans l'Exemple 1, mais sans agiter le bain. Le décapage a demandé 38 minutes.

## EXEMPLE 3 : EMULSION EPAISSIE

On a préparé une émulsion décapante épaissie formulée comme suit:

| Eau | 78,1 % |
| --- | --- |
| Alcool benzylique | 11,5 % |
| Diméthylsulfoxyde | 10,4 % |
| | 100 % |

Epaississant acrylique commercialisé sous la dénomination "CARBOPOL E22" par la Société "GOODRICH" 2,8%

On obtient un mélange ayant l'aspect d'un "lait épais" parfaitement homogène, qui ne présente pas de démixtion même après plusieurs semaines.

On a conduit en essai de décapage en appliquant à la température ambiante (20°C) ce mélange sur un acier phosphaté revêtu d'une laque polyester (Blanc Glacier 389 d'HERBERTS), fourni par la Société ETALON.

Le décapage a demandé 360 minutes.

## EXEMPLES 4 A 7

On a préparé les 4 formulations de type émulsion instable, telles qu'indiquées dans le Tableau 1.

On a conduit un décapage dans les conditions de l'Exemple 1. Les résultats sont donnés dans le Tableau 1.

TABLEAU 1

| Composition | Exemple 4 | Exemple 5 | Exemple 6 | Exemple 7 |
|---|---|---|---|---|
| Eau | 78,8% | 79,5% | 79,5% | 79,30 % |
| Alcool benzylique | 11,1% | 10,25% | 10,25% | 10,35 % |
| Diméthyl sulfoxyde | 10,1% | 10,25% | 10,25% | 10,35 % |
| | 100 % | 100 % | 100 % | 100 % |
| Monoéthanolamine | 1 % | | 1 % | 3,10 % |
| Benzaldéhyde | | 2,6 % | 2 % | |
| Temps de décapage (min.) | 7 | 3,3 | 2 | 100 |

## EXEMPLES 8 A 12

On a préparé la formulation de base suivante pour micro-émulsion :

| Eau | 78,1 % |
|---|---|
| Alcool benzylique | 11,5 % |
| Diméthylsulfoxyde | 10,4 % |
| | 100 % |
| Dodécylsulfate de sodium | 3,1% |

On a préparé cinq microémulsions en ajoutant à la formulation de base 1% d'un activateur tel qu'indiqué dans le Tableau 2 suivant et on a conduit les essais de décapage comme à l'Exemple 2. Les résultats de décapage sont également indiqués dans ce Tableau.

TABLEAU 2

| Exemple | 8 | 9 | 10 | 11 | 12 |
|---|---|---|---|---|---|
| Activateur | Monoéthanolamine | TEA/acide formique | Pyrrole | Acide formique | Benzaldéhyde |
| Temps de décapage (min) | 18 | 24 | 14 | 9,5 | 11 |

## EXEMPLES 13 A 16

On a préparé les quatre émulsions décapantes épaissies telles qu'indiquées dans le Tableau 3. On a conduit un décapage dans les conditions de l'Exemple 3. Les résultats sont également indiqués dans le Tableau 3.

TABLEAU 3

| Composition | Exemple 13 | Exemple 14 | Exemple 15 | Exemple 16 |
|---|---|---|---|---|
| Eau | 78,1 % | 78,3 % | 78,1 % | 78,2 % |
| Alcool benzylique | 11,5 % | 11,4 % | 11,5 % | 11,4 % |
| Diméthyl-sulfoxyde | 10,4 % | 10,3 % | 10,4 % | 10,4 % |
| | $\overline{100\ \%}$ | $\overline{100\ \%}$ | $\overline{100\ \%}$ | $\overline{100\ \%}$ |
| Epaississant "CARBOPOL E22" | 2,4 % | 5,5 % | 4,2 % | 3,7 % |
| Pyrrole | 1 % | | | |
| Acide formique | | 1% | 5,25% | |
| TEA/Acide formique | | | | 4,2% |
| Temps de décapage (min) | 240 | 210 | 70 | 1,0 |

### EXEMPLE 17 : EMULSION INSTABLE

On a préparé une émulsion instable décapante formulée comme suit :

| | |
|---|---|
| Eau | 78 % |
| Alcool benzylique | 11 % |
| N-méthyl-pyrrolidone | 11 % |
| | $\overline{100\ \%}$ |

On a procédé comme à l'Exemple 1. Le décapage a demandé 19 minutes 30.

### EXEMPLE 18

On a préparé une formulation du type émulsion instable ayant la composition telle qu'indiquée ci-après :

| | |
|---|---|
| eau | 78,30 % |
| alcool benzylique | 10,85 % |
| diméthylsulfoxyde | 10,85 % |
| | $\overline{100\ \%}$ |
| hydroxyde de sodium | 8,7 % |

On a immergé dans un bain de cette émulsion, porté à 50°C, sous agitation, une plaque en acier XC45 phosphaté revêtue d'une poudre époxy.
Le décapage a demandé 10 minutes.

### Revendications

1. Composition décapante pour peintures, laques ou primaires, caractérisée par le fait qu'elle est constituée par :

    (A) 5 à 90 parties en poids d'eau ;
    (B) 2 à 47,5 parties en poids d'alcool benzylique ;
    (C) 2 à 47,5 parties en poids de diméthylsulfoxyde ou de N-méthylpyrrolidone,

    (A) + (B) + (C) représentant 100 parties en poids.

2. Composition selon la revendication 1, caractérisée par le fait qu'elle est constituée par :

    (A) 10 à 80 parties en poids d'eau ;
    (B) 5 à 45 parties en poids d'alcool benzylique ; et

(C) 5 à 45 parties en poids de diméthylsulfoxyde ou de N-méthylpyrrolidone.

3. Composition selon l'une des revendications 1 et 2, caractérisée par le fait qu'elle comprend en outre :
  (D) 0,1 à 10 parties en poids, pour 100 parties en poids de (A) + (B) + (C), d'au moins un activateur choisi parmi la monoéthanolamine, la triéthanolamine, l'acide formique, le pyrrole, les mélanges TEA/acide formique, le benzaldéhyde, les mélanges MEA/benzaldéhyde et les hydroxydes de métaux alcalins.

4. Composition selon la revendication 3, caractérisée par le fait que l'activateur est un mélange monoéthanolamine/benzaldéhyde, le benzaldéhyde ou l'hydroxyde de sodium.

5. Composition selon l'une des revendications 1 à 4, caractérisée par le fait qu'elle comprend en outre :
  (E) au moins un agent tensio-actif choisi parmi les agents tensio-actifs non ioniques éthoxylés et le dodécylsulfate de sodium, à raison de 0,1 à 10 parties en poids pour 100 parties en poids de (A) + (B) + (C).

6. Composition selon l'une des revendications 1 à 5, caractérisée par le fait qu'elle comprend en outre :
  (F) au moins un épaississant choisi notamment parmi les épaississants acryliques, à raison de 0,1 à 10 parties en poids pour 100 parties en poids de (A) + (B) + (C).

7. Composition selon l'une des revendications 1 à 4, caractérisée par le fait qu'elle ne comprend ni tensio-actif ni épaississant, et qu'elle se présente sous la forme d'une émulsion instable.

8. Composition selon la revendication 5, caractérisée par le fait qu'elle comprend au moins un tensio-actif et aucun épaississant, et qu'elle se présente sous la forme d'une micro-émulsion.

9. Composition selon la revendication 6, caractérisée par le fait qu'elle comprend au moins un épaississant et aucun agent tensio-actif, et qu'elle se présente sous la forme d'une émulsion épaissie.

10. Procédé de décapage d'une peinture, d'un vernis ou d'une laque appliqué sur un substrat, caractérisé par le fait qu'on immerge ledit substrat dans un bain éventuellement chauffé et éventuellement agité d'une composition telle que définie à l'une des revendications 7 et 8 pendant un laps de temps suffisant pour provoquer le soulèvement de la peinture, du vernis ou de la laque, ou qu'on applique sur le substrat une émulsion épaissie telle que définie à la revendication 9 et qu'on laisse agir pendant un laps de temps suffisant pour le provoquer le soulèvement de la peinture.

**Patentansprüche**

1. Zusammensetzung zum Abbeizen von Farben, Lacken oder Grundierungen,
  dadurch gekennzeichnet, daß
  sie besteht aus:

  (A) 5 bis 90 Gewichtsteilen Wasser;
  (B) 2 bis 47,5 Gewichtsteilen Benzylalkohol; und
  (C) 2 bis 47,5 Gewichtsteilen Dimethylsulfoxid oder N-Methyl-pyrrolidon,

  wobei (A) + (B) + (C) 100 Gewichtsteile ausmachen.

2. Zusammensetzung nach Anspruch 1, dadurch gekennzeichnet, daß sie besteht aus:

  (A) 10 bis 80 Gewichtsteilen Wasser;
  (B) 5 bis 45 Gewichtsteilen Benzylalkohol; und
  (C) 5 bis 45 Gewichtsteilen Dimethylsulfoxid oder N-Methyl-pyrrolidon.

3. Zusammensetzung nach einem der Ansprüche 1 und 2, dadurch gekennzeichnet, daß sie ferner enthält:
  (D) 0,1 bis 10 Gewichtsteile mindestens eines Aktivators pro 100 Gewichtsteile (A) + (B) + (C), der unter Monoethanolamin, Triethanolamin, Ameisensäure, Pyrrol, TEA/Ameisensäure-Gemischen, Benzaldehyd, MEA/Benzaldehyd-Gemischen und Alkalihydroxiden ausgewählt ist.

4. Zusammensetzung nach Anspruch 3, dadurch gekennzeichnet, daß es sich bei dem Aktivator um ein Monoethanolamin/Benzaldehyd-Gemisch, Benzaldehyd oder Natriumhydroxid handelt.

5. Zusammensetzung nach einem der Ansprüche 1 bis 4, dadurch gekennzeichnet, daß sie ferner enthält: (E) in Anteilen von 0,1 bis 10 Gewichtsteilen pro 100 Gewichtsteile (A) + (B) + (C) mindestens einen grenzflächenaktiven Stoff, der unter den ethoxylierten nichtionischen grenzflächenaktiven Stoffen und Natriumdodecylsulfat ausgewählt ist.

6. Zusammensetzung nach einem der Ansprüche 1 bis 5, dadurch gekennzeichnet, daß sie ferner enthält: (F) in Anteilen von 0,1 bis 10 Gewichtsteilen, pro 100 Gewichtsteile (A) + (B) + (C) mindestens ein Verdickungsmittel, das insbesondere unter den Acrylverdickungsmitteln ausgewählt ist.

7. Zusammensetzung nach einem der Ansprüche 1 bis 4, dadurch gekennzeichnet, daß sie weder einen grenzflächenaktiven Stoff noch ein Verdickungsmittel enthält und daß sie in Form einer instabilen Emulsion vorliegt.

8. Zusammensetzung nach Anspruch 5, dadurch gekennzeichnet, daß sie mindestens einen grenzflächenaktiven Stoff und kein Verdickungsmittel enthält und daß sie in Form einer Mikroemulsion vorliegt.

9. Zusammensetzung nach Anspruch 6, dadurch gekennzeichnet, daß sie mindestens ein Verdickungsmittel und keinen grenzflächenaktiven Stoff enthält und daß sie in Form einer dickflüssigen Emulsion vorliegt.

10. Verfahren zum Abbeizen von Farben, Firnissen oder Lacken, die auf ein Substrat aufgetragen sind, dadurch gekennzeichnet, daß das Substrat während einer Zeitspanne, die ausreichend ist, um die Farbe, den Firnis oder den Lack abzuheben, in ein gegebenenfalls geheiztes und gegebenenfalls gerührtes Bad einer Zusammensetzung nach einem der Ansprüche 7 und 8 eingetaucht wird oder auf das Substrat eine dickflüssige Emulsion nach Anspruch 9 aufgebracht und während einer Zeitspanne einwirken gelassen wird, die ausreichend ist, um die Farbe abzuheben.

## Claims

1. Composition for stripping paints, lacquers, or primers, characterized in that it consists of or comprises :

   (A) 5 to 90 parts by weight of water ;
   (B) 2 to 47.5 parts by weight of benzyl alcohol ;
   (C) 2 to 47.5 parts by weight of dimethyl sulphoxide or N-methylpyrrolidone,

   (A) + (B) + (C) representing 100 parts by weight.

2. Composition according to Claim 1, characterized in that it consists of or comprises :

   (A) 10 to 80 parts by weight of water ;
   (B) 5 to 45 parts by weight of benzyl alcohol ;
   (C) 5 to 45 parts by weight of dimethyl sulphoxide or N-methylpyrrolidone.

3. Composition according to either of Claims 1 and 2, characterized in that it also comprises :
   (D) 0.1 to 10 parts by weight, per 100 parts by weight of (A) + (B) + (C), of at least one activator chosen from monoethanolamine, triethanolamine, formic acid, pyrrole, TEA/formic acid mixtures, benzaldehyde, MEA/benzaldehyde mixtures and alkali metal hydroxides.

4. Composition according to Claim 3, characterized in that the activator is a monoethanolamine/benzaldehyde mixture, benzaldehyde or sodium hydroxide.

5. Composition according to one of Claims 1 to 4, characterized in that it also comprises :
   (E) at least one surfactant chosen from nonionic ethoxylated surfactants and sodium dodecyl sulphate, in a proportion of from 0.1 to 10 parts by weight per 100 parts by weight of (A) + (B) + (C).

6. Composition according to one of Claims 1 to 5, characterized in that it also comprises :

(F) at least one thickener chosen in particular from acrylic thickeners, in a proportion of from 0.1 to 10 parts by weight per 100 parts by weight of (A) + (B) + (C).

7. Composition according to one of Claims 1 to 4, characterized in that it comprises neither surfactant nor thickener, and that it is in the form of an unstable emulsion.

8. Composition according to Claim 1 to 5, characterized in that it comprises at least one surfactant and no thickener, and that it is in the form of a microemulsion.

9. Composition according to one of Claims 1 to 4 and 6, characterized in that it comprises at least one thickener and no surfactant and that it is in the form of a thickened emulsion.

10. Process for stripping a paint, a varnish or a lacquer applied to a substrate characterized in that said substrate is immersed in a bath which is optionally heated and optionally stirred, of a composition as defined in either of Claims 7 and 8, for a duration which is sufficient to bring about the removal of the paint, varnish or lacquer, or in that a thickened emulsion as defined in Claim 9 is applied to the substrate and is left to act for a duration which is sufficient to bring about the removal of the paint.